# EUROPÄISCHE PATENTSCHRIFT

(11) **EP 0 636 583 B1**
(45) Veröffentlichungstag und Bekanntmachung des Hinweises auf die Patenterteilung: **16.12.1998**
(21) Anmeldenummer: 94110700.5
(22) Anmeldetag: 09.07.1994
(51) Int. Cl.: C02F 1/78, C02F 3/10

(54) **Verfahren zur Aufbereitung von organisch belastetem Wasser**
Process for purifying organically polluted wastewater
Procédé d'épuration d'eaux usées chargées en impurités organiques

(30) Priorität: 31.07.1993 DE 4325803
(43) Veröffentlichungstag der Anmeldung: 01.02.1995
(73) Patentinhaber: Bachhofer, Bruno, D-88213 Ravensburg (DE); Locher, Anton, D-88214 Ravensburg (DE)
(72) Erfinder: Bachhofer, Bruno, D-88213 Ravensburg (DE); Locher, Anton, D-88214 Ravensburg (DE)
(74) Vertreter: Patentanwälte Eisele, Otten & Roth

(56) Entgegenhaltungen:
- DE-A- 4 024 529
- DATABASE WPI Section Ch, Week 9235, Derwent Publications Ltd., London, GB; Class D15, AN 92-288573 & JP-A-4 197 498 (MEIDENSHA) 17. Juli 1992

## Beschreibung

Die Erfindung betrifft ein Verfahren zur Aufbereitung von organisch belastetem Wasser z. B. zum Zwecke der Gewinnung von Trinkwasser, nach dem Gattungsbegriff des Patentanspruchs 1.

Ein Verfahren dieser Gattung ist aus der deutschen Offenlegungsschrift 40 24 529 der Anmelder bekannt. Damit soll außer der organischen Belastung auch ein im Rohwasser enthaltener Nitratanteil verringert werden.

Generell besteht das Ziel der Trinkwasseraufbereitung nicht nur darin, die für den menschlichen Genuß bedenkliche Fracht, d.h. Schmutzstoffe, Bakterien usw. sondern auch alle diejenigen Inhaltsstoffe möglichst vollständig aus dem Wasser zu entfernen, die als Nährstoffe für Mikroorganismen in Betracht kommen. Es besteht die Gefahr, daß sich Mikroorganismen im Verteilernetz, insbesondere in schwach durchströmten Zweigleitungen, ansiedeln und bei der Assimilierung dieser noch im Wasser verbliebenen Inhaltsstoffe den vorhandenen Sauerstoff abatmen. Als hygienische Maßnahme wird überlicherweise dem Wasser Chlor beigegeben, um das Keimwachstum zu reduzieren. Die Devise muß deshalb heißen: Hygiene durch Nährstoffentzug. Auf diese Weise kann die erforderliche Chlormenge verringert werden.

Bei dem gattungsgemäßen Verfahren werden durch die Einwirkung von Ozon die organischen Wasserinhaltsstoffe keineswegs alle vollständig mineralisiert. Vielmehr werden höhermolekulare Verbindungen nur aufgebrochen zu kleineren Einheiten. Heutzutage sind nämlich in den Wasservorkommen außer den natürlichen Stoffen in zunehmendem Maße auch vom Menschen gemachte hochmolekulare organische Substanzen enthalten, die durch die Ozonbehandlung allenfalls zu niedermolekularen Verbindungen zerschlagen werden. Diese Inhaltsstoffe werden damit zu Nährstoffen für die Bakterien, d.h. zu das Keimwachstum fördernden assimilierbaren organischen Substanzen.

Bei dem gattungsgemäßen Verfahren wird weiter davon ausgegangen, daß der Ozonbehandlungseinheit ein als "Festbettreaktor" ausgebildeter Mehrschicht-Filter nachgeschaltet ist. Ein solcher Filter weist vorzugsweise eine obere aus Filterkohle bestehende Grobfilterschicht und eine darunterliegende Feinsandschicht auf. Die Filterkohle (Aktivkohle) hat in erster Linie die Aufgabe, das im Wasser gelöste Restozon zu eliminieren, teils durch Wandkatalyse, teils durch Bildung von CO₂. Der Filter insgesamt hat zum einen eine mechanische Siebwirkung, andererseits laufen in dem Filter aber auch adsorptive und andere Grenzschichtvorgänge, chemische Umsetzungen und ausgeprägte biologische Prozesse ab. Es ist bekannt, daß sich auf der Oberfläche der Filterkörner ein wasserspezifisch mehr oder weniger starker Film aus heterotrophen Mikroorganismen bildet und zwar vom aeroben Typus. Diese tragen in dem sauerstoffreichen Milieu zur weiteren Beseitigung gelöster Nährstoffe bei. Meist handelt es sich um Lebensgemeinschaften aus verschiedenen Organismen, die miteinander eine Symbiose bilden.

"Die vorliegenden Untersuchungen beweisen also eindeutig, daß auch Schnellfilter mit Kiesverfüllung trotz der hohen Filtergeschwindigkeiten mehr oder weniger ausgeprägt biologisch arbeitende Filter darstellen, deren Besiedlung(sdichte) wahrscheinlich von der Rohwasserqualität abhängt" (Obst/Alexander/Mevius, "Biotechnologie in der Wasseraufbereitung", R. Oldenbourg Verlag München Wien 1990 ISBN 3-486-26104-5, Seite 95).

Der Erfindung liegt die Aufgabe zugrunde, bei dem gattungsgemäßen Verfahren die biologische Mineralisation zu optimieren.

Diesbezüglich ist aus der vorgenannten Veröffentlichung, Seite 85, bekannt, daß auch bei nährstoffreichem Wasser das Wachstum von Biofilmen durch das Angebot von Sauerstoff und organischem Kohlenstoff limitiert wird, wobei der Sauerstoff der erste begrenzende Faktor ist. Bei dem gattungsgemäßen Verfahren ist jedoch infolge der intensiven Ozonbehandlung im Filterbereich genügend molekularer Sauerstoff vorhanden und auch das Nährstoffangebot ist dank der Vorbehandlung mit Ozon reichlich. Trotzdem ist häufig nur ein ungenügendes Bakterienwachstum zu beobachten.

Erfindungsgemäß wird die Aufgabe durch das kennzeichnende Merkmal des Patentanspruchs 1 gelöst. Dem liegt die Erkenntnis zugrunde, daß auch die an der Wasseraufbereitung beteiligten Mikroorganismen wie andere Lebewesen aus einem begrenzten Satz kleiner organischer Moleküle aufgebaut sind, die aus wenigen Hauptelementen bestehen, unter denen der Schwefel eine wichtige Rolle spielt. Zwar ist Schwefel im Wasser meist vorhanden. Infolge der Ozonbehandlung und in dem sauerstoffreichen Filtermilieu liegt er jedoch nur in höchst oxidierter Form als Sulfat vor, das den aeroben Mikroorganismen nicht zur Verfügung steht. Wenn deshalb Schwefel in einer bioverfügbaren Form in Strömungsrichtung hinter der Ozonbehandlungseinheit zugegeben wird, so wird dieser entscheidende Schwefelmangel der Mikroorganismen beseitigt mit der Folge, daß das Wachstum des Biofilms gefördert und damit die Reinigungswirkung der Biomasse beträchtlich erhöht wird.

Bioverfügbar ist Schwefel nur in reduzierten Verbindungen. Unter den Sulfiden hat sich Natriumsulfid als besonders geeignet erwiesen. Es löst sich leicht in Wasser und kann deshalb mittels einer Dosierpumpe bekannter Technologie zuverlässig dosiert werden. Geeignete andere Verbindungen sind aber auch Schwefelwasserstoff, Natriumsulfit oder Natriumthiosulfat.

Schließlich wird vorgeschlagen, daß eine das Verfahren zeitlich und örtlich abschließende Behandlung des Wassers mit Ozon stattfindet. Die Ozongabe an dieser Stelle bewirkt zwingend die Oxidierung möglicherweise noch vorhandener Reste an assimilierbarem, wenig oxidiertem Schwefel, z.B. Sulfid, zu Sulfat.

Ein Ausführungsbeispiel des erfindungsgemäßen Verfahrens wird anhand einer schematischen Darstellung erläutert.

Eine in einem Brunnen angeordnete Förderpumpe 1 fördert Rohwasser in ein Trinkwasserverteilungsnetz über die dargestellte Trinkwasseraufbereitungsanlage. Zunächst wird das Wasser in einer Ozonbehandlungseinheit 2 intensiv mit Ozon vermischt, das in einem Ozonerzeuger 3 hergestellt wird. Nach der Ozonbehandlung wird dem Wasser mittels einer Dosierpumpe 7 eine in einem Behälter 8 bevorratete Natriumsulfidlösung zudosiert. Sodann durchströmt das Wasser ein Filtergefäß 4, das mehrere Filterschichten und eine durchlässige Sohle aufweist, wobei sich in dem Filter eine Lebensgemeinschaft von Mikroorganismen festgesetzt hat, die an der weiteren Mineralisierung der noch im Wasser enthaltenen Inhaltsstoffe wesentlich beteiligt ist. Schließlich durchläuft das Wasser noch eine abschließende Behandlungseinheit 5, in welcher das Wasser mit einem über die Leitungen 6 aus der Ozonbehandlungseinheit 2 und dem Filtergefäß 4 gewonnenen Gemisch aus Restozon und Luft vermengt wird.

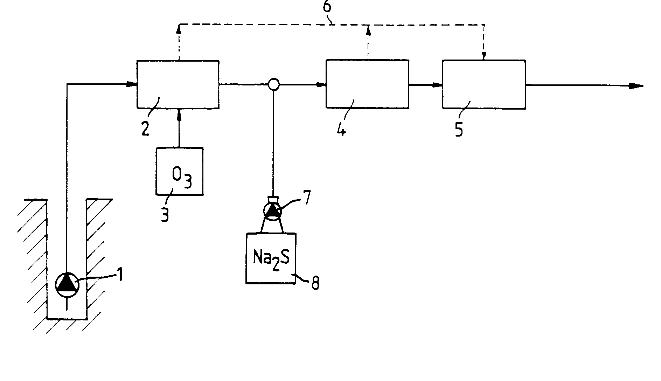

## Patentansprüche

1. Verfahren zur Aufbereitung von organisch belastetem Wasser, z.B. zum Zwecke der Gewinnung von Trinkwasser, wobei das Rohwasser in einer Ozonbehandlungseinheit mit Ozon intensiv vermischt und nachfolgend durch einen aus unterschiedlichen Schichten aufgebauten Filter (Festbettreaktor) geleitet wird, dadurch gekennzeichnet, daß zwischen der Ozonbehandlungseinheit (2) und dem Filter (4) Schwefel in Form einer für die Assimilation durch Mikroorganismen verfügbaren Verbindung, z.B. eines Sulfids, zudosiert wird.

2. Verfahren nach Anspruch 1, dadurch gekennzeichnet, daß der Filter (4) eine obere aus Filterkohle bestehende Grobfilterschicht und eine darunterliegende Schicht aus Feinsand aufweist.

3. Verfahren nach Anspruch 1, dadurch gekennzeichnet, daß eine wässrige Natriumsulfidlösung zudosiert wird.

4. Verfahren nach Anspruch 1, dadurch gekennzeichnet, daß Schwefelwasserstoff oder Natriumsulfit oder Natriumthiosulfat zudosiert wird.

5. Verfahren nach Anspruch 1, dadurch gekennzeichnet, daß eine das Verfahren abschließende Behandlung (5) des Wassers mit Ozon stattfindet, um eventuell noch vorhandenen bioverfügbaren Schwefel, z.B. Sulfid, in die Sulfatform zu oxidieren.

## Claims

1. Method for the treatment of organic-laden water, e.g. for the purpose of obtaining drinking water, whereby the untreated water is intensively mixed with ozone in an ozone treatment unit and is then directed through a filter (fixed-bed reactor) composed of different layers, characterised in that sulphur in the form of a compound available for assimilation by means of microorganisms, e.g. a sulphide, is added in metered doses between the ozone treatment unit (2) and the filter (4).

2. Method according to Claim 1, characterised in that the filter (4) has an upper coarse filter layer consisting of filter carbon and a layer of fine sand located below this.

3. Method according to Claim 1, characterised in that an aqueous sodium sulphide solution is added in metered doses.

4. Method according to Claim 1, characterised in that hydrogen sulphide or sodium sulphite or sodium thiosulphate is added in metered doses.

5. Method according to Claim 1, characterised in that a treatment (5) of the water with ozone is performed to conclude the process in order to oxidise any bioavailable sulphur, e.g. sulphide, possibly still present into the sulphate form.

## Revendications

1. Procédé pour traiter de l'eau chargée de matières organiques, par exemple dans le but de produire de l'eau potable, l'eau brute étant mélangée intensivement avec de l'ozone dans une unité de traitement à l'ozone et, ensuite, conduite à travers un filtre (réacteur à lit fixe) construit à partir de différentes couches,
caractérisé en ce que, entre l'unité de traitement à l'ozone (2) et le filtre (4), il est ajouté, de façon dosée, du soufre sous forme d'un composé disponible pour l'assimilation par des micro-organismes, par exemple un sulfure.

2. Procédé selon la revendication 1,
caractérisé en ce que le filtre (4) présente une couche de filtration grossière constituée de charbon de filtrage et une couche sous-jacente constituée de sable fin.

3. Procédé selon la revendication 1,
caractérisé en ce qu'une solution aqueuse de sulfure de sodium est ajoutée de façon dosée.

4. Procédé selon la revendication 1,
caractérisé en ce que de l'acide sulfhydrique ou du sulfite de sodium ou du thiosulfate de sodium est ajouté de façon dosée.

5. Procédé selon la revendication 1,
caractérisé en ce qu'un traitement (5), terminant le procédé, de l'eau avec de l'ozone a lieu pour oxyder du soufre, encore éventuellement présent, biodisponible, par exemple du sulfure, sous la forme de sulfate.
